# EUROPEAN PATENT SPECIFICATION

(11) **EP 1 375 441 B1**
(45) Date of publication and mention of the grant of the patent: **20.07.2005**
(21) Application number: 02711217.6
(22) Date of filing: 23.01.2002
(51) Int. Cl.: C03B 37/012, C03B 37/027, C03B 37/014, C03B 37/018

(54) **METHOD OF SUPPORTING GLASS BASE MATERIAL AND SUPPORTING PIN**
VERFAHREN ZUR TRÄGERUNG EINES GLASBASISMATERIALS UND TRAGESTIFT
PROCEDE DE SOUTIEN D'UN MATERIAU DE BASE EN VERRE ET TIGE DE SUPPORT

(30) Priority: 23.03.2001 JP 2001085928
(43) Date of publication of application: 02.01.2004
(73) Proprietor: Sumitomo Electric Industries Co., Ltd., Osaka-shi, Osaka 541-0041 (JP)
(72) Inventor: YAGI, Kanta c/o Kiyohara Sumiden Ind. Ltd., Utsunomiya-shi, Tochigi 321-3231 (JP); KUDO, Toshinori c/o Kiyohara Sumiden Ind. Ltd., Utsunomiya-shi, Tochigi 321-3231 (JP)
(74) Representative: HOFFMANN - EITLE
(86) International application number: PCT/JP2002/000463
(87) International publication number: WO 2002/076896

(56) References cited:
- JP-A- 5 043 255
- JP-A- 7 041 330
- JP-A- 11 349 342
- JP-A- 2000 044 268
- JP-U- 3 089 127
- US-A- 5 417 399
- US-A- 5 674 306
- PATENT ABSTRACTS OF JAPAN vol. 1995, no. 01, 28 February 1995 (1995-02-28) & JP 06 298540 A (FUJIKURA LTD), 25 October 1994 (1994-10-25)
- PATENT ABSTRACTS OF JAPAN vol. 012, no. 139 (C-491), 27 April 1988 (1988-04-27) & JP 62 256735 A (HITACHI CABLE LTD), 9 November 1987 (1987-11-09)

## Description

### Field of the Invention

The present invention relates to a method for supporting a glass preform and to a support pin to be used with the method, and more particularly, to a method and support pin for supporting a glass preform on a carrier for carrying a glass preform; e.g., a glass preform for use as an optical fiber, or a glass preform to be used in manufacturing a silicon substrate for a semiconductor device, a photomask substrate of an integrated circuit, or a glass substrate for use as a liquid-crystal display.

### Background

Methods for manufacturing a glass preform for use as an optical fiber comprise a series of processes: that is, a sooting process for depositing fine particles of porous glass on a quartz seed rod by a VAD method or the like; a sintering process for heating and rendering transparent a porous glass preform formed through the sooting process; and a elongation process for elongating the thus-sintered glass preform. Even when these processes are carried out in a single factory, processing operations pertaining to the processes are performed independently. Further, facilities for processing are provided at separate locations. Consequently, the glass preform that has finished undergoing manufacturing operation must be transported to a manufacturing facility for the next process.

In an attempt to improve production efficiency and reduce the cost of an optical fiber, a glass preform for optical fiber has recently been up-sized and made heavier. An operation-by which an operator manually attaches and detaches the glass preform to and from a manufacturing apparatus and transports the glass preform from one process to another process-has become difficult.

On this account, a technique for attaching and detaching an optical fiber glass preform through use of a manually-operated crane or a transport vehicle has been developed (as described in, e.g., JP-A-2000-44268). An optical fiber glass preform usually has at one end a quartz seed rod to be used for depositing porous glass. The quartz seed rod is used as a member for supporting the optical fiber glass preform. The quartz seed rod can be cut and recycled after the optical fiber glass preform has been sintered and subjected to fiber drawing.

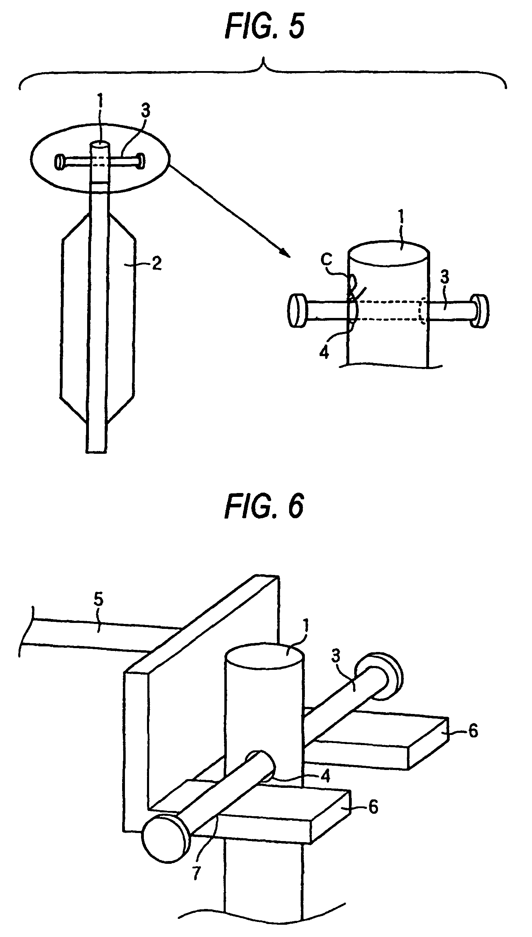

Figs. 5 and 6 are disclosed in JP-A-2000-44268 and are drawings showing an example in which the optical fiber glass preform is suspended and supported with a support pin. Fig. 5 is a view showing a state in which the support pin is attached to the optical fiber glass preform, and Fig. 6 is a view showing a state in which the optical fiber glass preform is suspended and supported by the support pin. In the drawings, reference numeral 1 designates a quartz seed rod; 2 designates a glass preform; 3 designates a support pin; 4 designates a pin insert hole; 5 designates a carrier arm; 6 designates a support arm; and 7 designates an engagement groove.

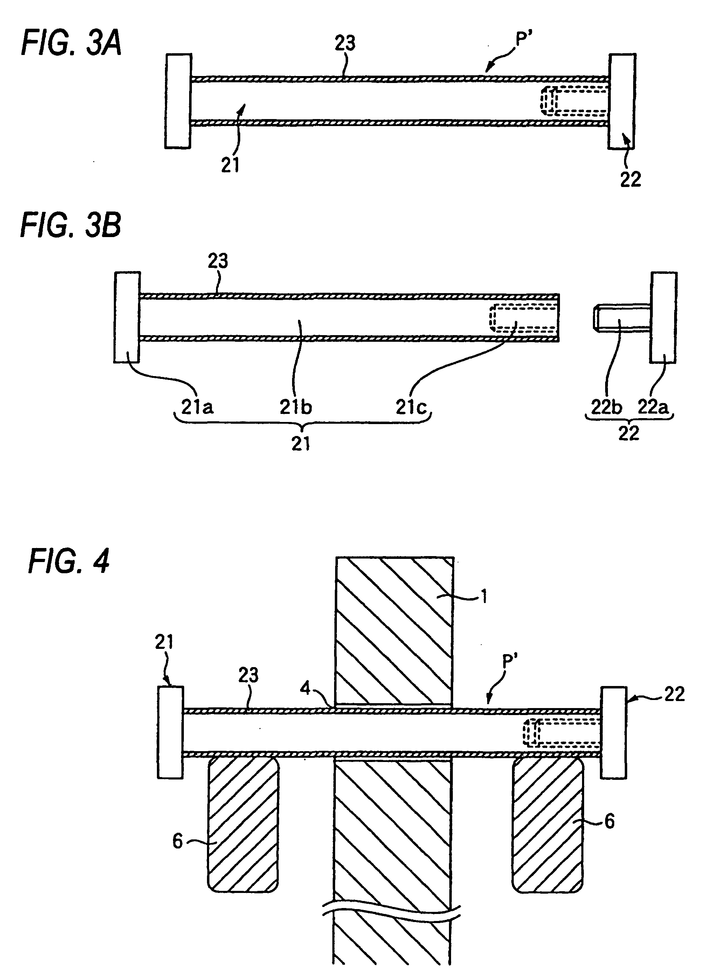

As shown in Fig. 5, the quartz seed rod 1 is integrally joined to the upper end of the glass preform. The pin insert hole 4 is formed in the quartz seed rod 1 in a direction perpendicular to the axial direction of the glass preform. The support pin 3 is inserted into the pin insert hole 4 such that the ends of the support pin 3 project from the respective sides of the quartz seed rod 1. As shown in Fig. 4, the ends of the support pin 3 projecting from the respective sides of the quartz seed rod 1 horizontally span across a pair of the support arms 6 provided on the carrier arm 5. The ends of the support pin 3 are supported by the support arms 6, and the center section of the support pin 3 suspends and supports the quartz seed rod 1 and the glass preform 2. The grooves 7 are formed in the respective support arms 6 for receiving the support pin 3 at a predetermined position. The carrier arm 5 is mounted on the manually-operated crane or the transport vehicle, thereby transporting the glass preform 2 suspended by the support pin 3.

The support pin 3 is formed from metal such as stainless steel or from ceramics. Cracks C or fractures sometimes arise in the vicinity of the pin insert hole 4 where the quartz seed rod 1 comes into contact with the pin insert hole 4, for reasons of physical shock or vibration caused during transport. If cracks or fractures have arisen in the quartz seed rod 1, transport for subsequent processes will become impossible, thus hindering attachment of the quartz seed rod to the manufacturing facility. The quartz seed rod 1 is cut and recycled after use. However, if cracks or the like have arisen in the quartz seed rod, recycling of the quartz seed rod becomes impossible.

### Disclosure of the Invention

The invention aims at providing a glass preform supporting method and a support pin for use therewith, which prevent occurrence of cracks or fractures in a seed rod. The invention is directed toward a glass preform supporting method, wherein a support pin is inserted, by way of a buffer member, into a pin insert hole formed in a seed rod provided at an upper portion of the glass preform, and wherein the glass preform is supported by the support pin.

Preferably, the buffer member is an elastic material to be used for covering a shaft section of the support pin.

Preferably, the elastic material comprises synthetic resin.

Preferably, the elastic material comprises fluororesin.

Preferably, a shaft section of the support pin is coated with fluororesin.

Preferably, the synthetic resin covering a shaft section of the support pin assumes a thickness of 0.5 mm or more.

The invention is also directed toward a support pin comprising: a pin main body having a flange section, a first shaft section, a second shaft section, and a male screw section; and an auxiliary pin member which is to be coupled to the pin main body and has a flange section, a shaft section, and a female screw section, wherein the first shaft section and the second shaft section of the pin main body and the shaft section of the auxiliary pin member are covered with a buffering member, and the second shaft section of the pin main body coated with the buffering member can be inserted into a pin insert hole formed in a seed rod provided at an upper portion of a glass preform, thereby suspending and supporting the glass preform.

Preferably, the buffer comprises a synthetic resin material having elasticity.

Preferably, a washer made of synthetic resin is interposed between the pin main body and the auxiliary pin member.

### Brief Description of the Drawings

Fig. 1A is a view showing an axial cross section of a support pin according to an embodiment of the invention; and
Fig. 1B is a view showing an exploded cross section of the support pin according to an embodiment of the invention;
Fig. 2 is a view showing a method for supporting a glass preform of the invention;
Fig. 3A is a view showing an axial cross section of the support pin;
Fig. 3B is a view showing an exploded cross section of the support pin according to another embodiment of the invention;
Fig. 4 is a view showing another method for supporting the glass preform according to another embodiment of the invention;
Fig. 5 is a view showing a related-art support pin; and
Fig. 6 is a view showing a related-art method for supporting a glass preform.

### Best Modes for Implementing the Invention

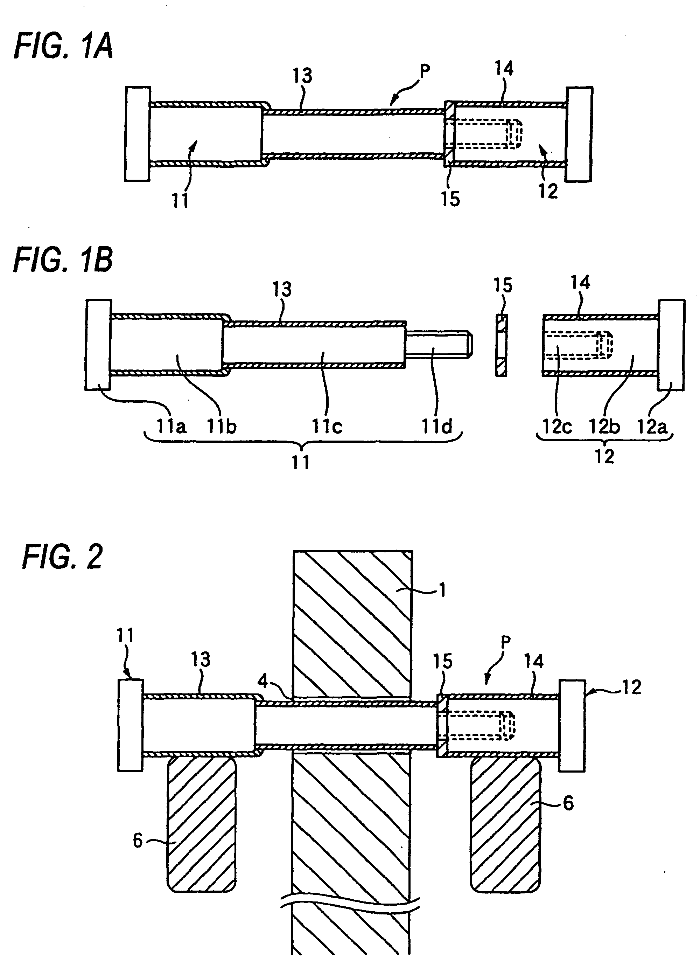

In the drawings, 11, 21 designate pin main bodies; 12, 22 designate auxiliary pin members; 13, 14, and 23 designate claddings; 15 designates a washer; and P, P' designate support pins. An embodiment of the invention will now be described by reference to Fig. 1. Fig. 1A is a view showing an axial cross section of a support pin, and Fig. 1B is a view showing an exploded cross section of the support pin. In the drawings, reference numeral 11 designate a pin main body; 12 designates an auxiliary pin member; 13, 14 designate claddings; 15 designates a washer; and P denotes a support pin. As shown in Fig. 1A, the support pin P is formed from the pin main body 11 and the auxiliary pin member 12, both being formed from metal such as stainless steel or from ceramics, wherein the pin main body and the auxiliary pin member are screw-coupled together by screw means. The claddings 13, 14 are formed on the surface of a shaft section of the support pin, by coating or the like.

As shown in Fig. 1B, a flange section 11a, a first shaft section 11b, a second shaft section 11c which is smaller in diameter than the first shaft section 11b, and a male screw section 11d are formed on the pin main body 11 by machining. The first shaft section 11b is formed so as to assume an outer diameter wider than the pin insert hole of the quartz seed rod; and the second shaft section 11c is formed so as to assume an outer diameter such that the second shaft section can be inserted into the pin insert hole of the quartz seed rod while being provided with the cladding 14. Synthetic resin, such as fluororesin or the like, is provided as a buffer on the outer surface of the first shaft section 11b and that of the second shaft section 11c by coating, to thus form a cladding 13 possessing elasticity.

The auxiliary pin member 12 is formed by machining a flange section 12a, a shaft section 12b, and a female screw section 12c. The shaft section 12b is formed to have the same length and diameter as the first shaft section 11b of the pin main body 11. As in the case of the pin main body 11, the outer surface of the shaft section 12b is coated with synthetic resin, such as fluororesin or the like, to thus form the cladding 14. The washer 15 is formed from the same kind of synthetic resin as that of the claddings 13, 14. The washer is interposed between a step section of the male screw section 11d of the pin main body 11 and an end face of the shaft section 12b of the auxiliary pin member 12.

The claddings 13, 14 are preferably formed to a thickness of 0.5 mm or more. The claddings can be formed directly on the pin main body 11 and the auxiliary pin member by coating. Alternatively, claddings may be formed beforehand in the form of heat-shrinkable tube and provided on the pin main body and the auxiliary pin member. When the optical fiber glass preform is transported in a hot state immediately after having been sooted, resin having superior heat resistance, such as fluororesin (e.g., Teflon (Trade Name)), is used for the synthetic resin constituting the claddings 13, 14. When the optical fiber glass preform is transported in a cold state, heat resistance is not particularly required. Various kinds of synthetic resin which are softer than glass and have a certain degree of elasticity can be used.

Fig. 2 is a view showing a state in which an optical fiber glass preform is supported by a support pin P having the foregoing structure. The pin main body 11 covered with the cladding 13 is inserted into one side of the pin insert hole 4 formed in the quartz seed rod 1 provided at the upper end of the optical fiber glass preform (see Fig. 5). The washer 15 is fitted to the male screw section 11d from the other side, the auxiliary pin member 12 covered with the cladding 14 is screw-coupled to the pin main body. The washer 15 covers an end surface of the second shaft section 11c of the pin main body 11 and an end surface of the shaft section 12c of the auxiliary pin member 12, thereby covering the entire shaft section of the support pin P. Thus, the quartz seed rod 1 is prevented from coming into direct contact with a metal section of the auxiliary pin member 12.

In the support pin P, only the second shaft section 11c of the pin main body 11 provided with the cladding 13 can be inserted into the pin insert hole 4 of the quartz seed rod 1. The first shaft section 11b and the shaft section 12b of the auxiliary pin member 12 project from the respective sides of the quartz seed rod 1, thereby ensuring the lengths of the shaft sections. Hence, positional adjustment of the support pin P is not required. The support arms 6 are brought from below into contact with the first shaft section 11b and the shaft section 12b, which project from respective sides of the quartz seed rod 1, and then the support arms 6 are raised. As a result, the optical fiber glass preform can be supported and transported along with the quartz seed rod 1 while being suspended.

When an optical fiber glass preform is transported through use of a related-art support pin having no claddings (see Fig. 6), cracks arise in the quartz seed rod at a frequency on the order of about 5%. However, use of the foregoing support pin P of the invention covered with the cladding 13 prevents occurrence of direct contact between the quartz seed rod 1 and hard metal or ceramics. Moreover, the cladding 13 having elasticity alleviates physical shock, thereby preventing occurrence of cracks or fractures, which would otherwise be caused while the optical fiber glass preform is transported. When the cladding has a thickness of 0.2 mm, the chance of occurrence of cracks can be diminished to 1%. By setting the thickness of the cladding to 0.7 mm, the chance of occurrence of cracks or the like can be totally eliminated. Consequently, the thickness of the cladding is preferably set to about 0.5 mm or more.

Fig. 3 shows another embodiment, wherein Fig. 3A shows an axial cross section of the support pin and Fig. 3B shows an exploded cross section of the support pin. In the drawing, reference numeral 21 designates a pin main body; 22 designates an auxiliary pinmember; 23 designates a cladding; and P' denotes a support pin. As shown in Fig. 3A, the support pin P' is formed by screw-coupling the auxiliary pin member 22 to one end of the pin main body 21 formed from metal, such as stainless steel or the like, through use of screw means, and forming a cladding 23 on the surface of a shaft section through coating or the like.

As shown in Fig. 3B, a flange section 21a, a shaft section 21b, and a female screw section 21c are formed on the pin main body 21 by machining. The shaft section 21b is formed so as to assume an outer diameter smaller than the pin insert hole of the quartz seed rod. An outer surface of the shaft section 21b is coated with synthetic resin such as fluororesin, to thus provide the cladding 23 having elasticity. The auxiliary pin member 22 is embodied by forming integrally, on a flange section 22a, a male screw section 22b to be screw-engaged with the female screw section 21 of the pin main body 21.

Fig. 4 is a view showing a state in which the optical fiber glass preform is supported by the support pin P' having the foregoing structure. The pin main body 21 having the cladding 13 is inserted into one side of the pin insert hole 4 formed in the quartz seed rod 1 formed at the upper end of the optical fiber glass preform. The auxiliary pin member 22 is attached to the other side of the pin insert hole by screw engagement. The quartz seed rod 1 is located at the center of the support pin P', thereby rendering substantially identical the lengths of both sides of the support pin projecting from both sides of the quartz seed rod 1. The support arms 6 are brought, from below, into contact with shaft portions of the support pin projecting from the respective sides of the quartz seed rod 1, to thus raise the quartz seed rod, whereby the optical fiber glass preform can be transported in a suspended manner in conjunction with the quartz seed rod 1.

In the embodiment, the support pin is imparted with a shock-absorbing characteristic by coating with synthetic resin. However, the pin insert hole 4 may be coated with cushioning material. Alternatively, an elastic member having heat resistance may be inserted into the pin insert hole 4, and the support pin inserted into the pin insert hole by way of the elastic member.

In the example shown in Figs. 3 and 4, the shaft section of the related-art support pin is covered with the cladding 23 having elasticity. However, no direct contact arises between the quartz seed rod and the support pin, and the cladding 23 having elasticity alleviates physical shock. Hence, as in the case illustrated in Fig. 2, there can be prevented occurrence of cracks or fractures, which would otherwise be caused during the course of transport of the optical fiber glass preform.

Up to this point, the invention has been described through use of the embodiment of the glass preform for optical fiber. However, the invention can also be applied to a glass preform used in manufacturing a silicon substrate for a semiconductor device, a photomask substrate of an integrated circuit, or a glass substrate for use as a liquid-crystal display.

### Industrial Applicability

As is evident from the foregoing descriptions, according to the invention, when a glass preform is transported while a support pin is inserted into a seed rod provided at an upper end of the glass preform, occurrence of cracks or fractures in the seed rod is prevented, thereby ensuring safety and improving yield and enabling recycling of the seed rod and manufacture of a larger-sized glass preform.

## Claims

1. A glass preform supporting method comprising the steps of:
inserting a support pin (11), covered by a buffering member (13, 14) into a pin insert hole (4) formed in a seed rod (1) provided at an upper portion of said glass preform; and
supporting the glass preform by said support pin.

2. The glass preform supporting method according to claim 1, wherein said buffer member is an elasticmaterial for covering a shaft section of said support pin.

3. The glass preform supporting method according to claim 2, wherein said elastic material comprises synthetic resin.

4. The glass preform supporting method according to claim 3, wherein said elastic material comprises fluororesin.

5. The glass preform supporting method according to claim 1, wherein said shaft section of said support pin is coated with fluororesin.

6. The glass preform supporting method according to claim 1, wherein said synthetic resin covering said shaft section of said support pin has a thickness of 0.5 mm or more.

7. A support pin, comprising:
a pin main body (11) having;
a flange section (11a);
a first shaft section (11b);
a second shaft section (11c); and
a male screw section (11d), and
an auxiliary pin member (12) coupled to said pin main body and having:
a flange section (12a);
a shaft section (12b); and
a female screw section (12c),
wherein
said second shaft section can be inserted into a pin insert hole (4) formed in a seed rod (1) provided at an upper portion of a glass preform, so that said glass preform is suspended and supported, **characterised in that** said first shaft section and said second shaft section of said pin main body, and said shaft section of said auxiliary pin member are covered with a buffering member (13, 14).

8. The support pin of a glass preform according to claim 7, wherein a washer (15) made of synthetic resin is interposed between said pin main body and said auxiliary pin member.

## Patentansprüche

1. Lagerverfahren für eine Glasvorform, umfassend die Schritte:
Einfügen eines Lagerstifts (11), der durch ein Pufferelement (13, 14) bedeckt ist, in ein Stifteinfügeloch (4), das in einem Einimpfstab (1) gebildet ist, der an einem oberen Abschnitt der Glasvorform vorgesehen ist; und
Lagern der Glasvorform durch den Lagerstift.

2. Lagerverfahren für eine Glasvorform nach Anspruch 1, bei welchem das Pufferelement ein elastisches Material zum Bedecken eines Schaftabschnitts des Lagerstifts ist.

3. Lagerverfahren für eine Glasvorform nach Anspruch 2, bei welchem das elastische Material Kunstharz aufweist.

4. Lagerverfahren für eine Glasvorform nach Anspruch 3, bei welchem das elastische Material Fluorharz aufweist.

5. Lagerverfahren für eine Glasvorform nach Anspruch 1, bei welchem der Schaftabschnitt des Lagerstifts mit Fluorharz beschichtet ist.

6. Lagerverfahren für eine Glasvorform nach Anspruch 1, bei welchem das Kunstharz, das den Schaftabschnitt des Lagerstifts bedeckt, eine Dicke von 0,5 mm oder mehr besitzt.

7. Lagerstift, umfassend:
einen Stifthauptkörper (11) mit:
einem Flanschabschnitt (11a);
einem ersten Schaftabschnitt (11b);
einem zweiten Schaftabschnitt (11c); und
einem männlichen Schraubenabschnitt (11d); und
ein Hilfsstiftelement (12), das mit dem Stifthauptkörper gekoppelt ist und besitzt:
einen Flanschabschnitt (12a);
einen Wellenabschnitt (12b); und
einen weiblichen Schraubenabschnitt (12c);
wobei der zweite Wellenabschnitt in ein Stifteinfügeloch (4) eingefügt werden kann, das in einem Einimpfstab (1) gebildet ist, der an einem oberen Abschnitt einer Glasvorform vorgesehen ist, so dass die Glasvorform abgehängt und gelagert ist,
**dadurch gekennzeichnet, dass**
der erste Schaftabschnitt und der zweite Schaftabschnitt des Stifthauptkörpers und der Schaftabschnitt des Hilfstiftelements mit einem Pufferelement (13, 14) bedeckt sind.

8. Lagerstift für eine Glasvorform nach Anspruch 7, bei welchem eine Scheibe (15), die aus einem Kunstharz hergestellt ist, zwischen dem Stifthauptkörper und dem Hilfsstiftelement eingelegt ist.

## Revendications

1. Procédé de support d'une préforme en verre comprenant les étapes consistant à:
insérer une broche de support (11), recouverte par un élément de tamponnage (13, 14), dans un trou (4) d'insert de broche, formé dans une tige formant germe (1) prévue dans une partie supérieure de ladite préforme en verre; et
supporter la préforme en verre au moyen de ladite broche de support.

2. Procédé de support d'une préforme en verre selon la revendication 1, selon lequel ledit élément de tamponnage est formé d'un matériau élastique servant à recouvrir une section formant tige de ladite broche de support.

3. Procédé de support d'une préforme en verre selon la revendication 2, dans lequel ledit matériau élastique comprend une résine synthétique.

4. Procédé de support d'une préforme en verre selon la revendication 3, selon lequel ledit matériau élastique comprend une résine fluorée.

5. Procédé de support d'une préforme en verre selon la revendication 1, selon lequel ladite section formant tige de ladite broche de support est recouverte d'une résine fluorée.

6. Procédé de support d'une préforme en verre selon la revendication 1, selon lequel ladite résine synthétique recouvrant ladite section formant tige de ladite broche de support possède une épaisseur de 0,5 mm ou plus.

7. Broche de support, comprenant:
un corps principal de broche (11) possédant:
une section de bride (11a);
une première section formant tige (11b);
une seconde section formant tige (11c);
une section filetée mâle (11d), et
un élément auxiliaire de broche (12) couplé audit corps principal de broche et comportant:
une section de bride (12a);
une section formant tige (12b); et
une section taraudée (12c),
dans laquelle
ladite section formant tige peut être insérée dans un trou (4) d'insertion de la broche, formé dans une tige formant germe (1) prévue dans une partie supérieure d'une préforme en verre, de sorte que ladite préforme en verre est suspendue et supportée,
**caractérisée en que** ladite première section formant tige et ladite seconde section formant tige dudit corps principal de broche et ladite section formant tige dudit élément auxiliaire de broche sont recouvertes par un élément de tamponnage (13, 14).

8. Broche de support d'une préforme en verre selon la revendication 7, dans laquelle une rondelle (15) formée d'une résine synthétique est intercalée entre ledit corps principal de broche et ledit élément auxiliaire de broche.
